# EUROPEAN PATENT APPLICATION

(11) **EP 4 822 817 A1**
(43) Date of publication of application: **14.10.2026**
(21) Application number: 26166694.5
(22) Date of filing: 23.03.2026
(51) Int. Cl.: H01M 10/54, C01G 53/50, H01M 4/525

(54) **METHOD FOR PRODUCING PRECURSOR OF POSITIVE ELECTRODE ACTIVE MATERIAL**

(30) Priority: 09.04.2025 JP 2025064484; 06.08.2025 JP 2025131818
(71) Applicant: Prime Planet Energy & Solutions, Inc., Chuo-ku, Tokyo 103-0022 (JP); The University of Tokyo, Bunkyo-ku, Tokyo 113-8654 (JP)
(72) Inventor: SUZUKI, Shinya, Tokyo,, 103-0022 (JP); OUCHI, Takanari, Tokyo, 113-8654 (JP)
(74) Representative: Kuhnen & Wacker Patent- und Rechtsanwaltsbüro PartG mbB

(57) **Abstract**

A technique for improving the crystallization rate of Co is provided by the present disclosure. The method for producing a precursor of a positive electrode active material of the present disclosure includes a preparation step (S10) of preparing a mixed liquid containing Ni, trivalent Co, and ammonia, a reduction step (S20) of mixing the mixed liquid with a reducing agent to reduce the trivalent Co in the mixed liquid to divalent Co, and a crystallization step (S30) of lowering the ammonia concentration of the mixed liquid after the reduction step (S20) to precipitate a NiCo-containing compound. The mixed liquid before the crystallization step (S30) contains an anion that forms a salt with Ni and divalent Co.

## Description

### BACKGROUND OF THE DISCLOSURE

The present disclosure relates to a method for producing a precursor of a positive electrode active material.

Waste Management, February 2017, vol. 60, p. 680-688 discloses a method for obtaining a leachate in which Ni and Co have been selectively leached from positive electrode waste of used lithium-ion secondary batteries using a leaching agent containing ammonia and ammonium sulfate, and sodium sulfite as a reducing agent.

### SUMMARY

Incidentally, when crystallizing a precursor of a positive electrode active material of a lithium-ion secondary battery from ammonia water containing Ni and Co (for example, the above-mentioned leachate), a part of Co tends not to precipitate as a precursor and remains in the liquid phase. Therefore, a technique for improving the crystallization rate of Co is desired.

The method for producing a precursor of a positive electrode active material of the present disclosure includes: a preparation step of preparing a mixed liquid containing Ni, trivalent Co, and ammonia; a reduction step of mixing the mixed liquid with a reducing agent to reduce the trivalent Co in the mixed liquid to divalent Co; and a crystallization step of lowering the ammonia concentration of the mixed liquid after the reduction step to precipitate a NiCo-containing compound. The mixed liquid before the crystallization step contains an anion that forms a salt with Ni and divalent Co.

According to such a configuration, the crystallization rate of Co can be improved.

### BRIEF DESCRIPTION OF THE DRAWINGS

FIG. 1 is a flowchart showing an example of the method for producing a precursor of a positive electrode active material disclosed herein; and
FIG. 2 is a flowchart showing an example of operations and reagents used in each step of the production method shown in FIG. 1.

### DETAILED DESCRIPTION

Hereinafter, embodiments according to the present disclosure will be described with reference to the drawings. Note that matters not mentioned in the present specification but necessary for carrying out the present disclosure can be grasped as design matters of a person skilled in the art based on the prior art in the relevant field. The present disclosure can be carried out based on the content disclosed in the present specification and technical common knowledge in the relevant field.

Note that in the present specification, a numerical range expressed as "A to B" includes A and B.

Note that in the present specification, "secondary battery" refers to a power storage device capable of repeated charging and discharging. Further, in the present specification, "lithium-ion secondary battery" refers to a secondary battery that uses lithium ions as charge carriers and achieves charging and discharging by the transfer of charges accompanying lithium ions between positive and negative electrodes.

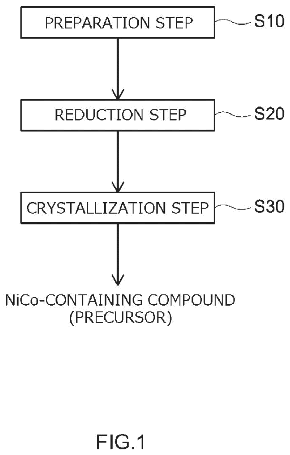

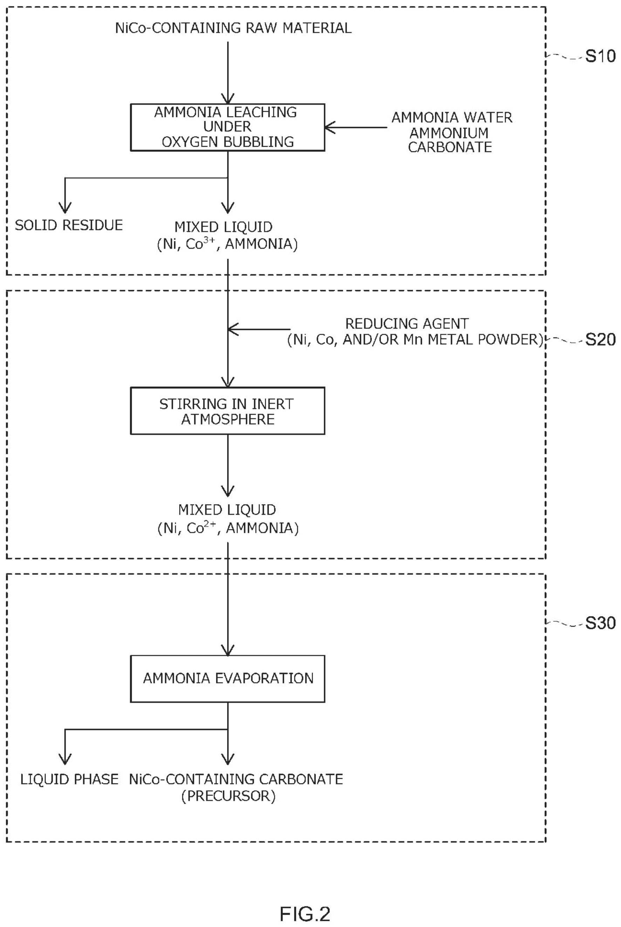

FIG. 1 is a flowchart showing an example of the method for producing a precursor of a positive electrode active material disclosed herein. FIG. 2 is a flowchart showing an example of operations and reagents used in each step of the production method shown in FIG. 1. As shown in FIG. 1, the method for producing a precursor of a positive electrode active material disclosed herein includes a preparation step S10, a reduction step S20, and a crystallization step S30. Note that the technology disclosed herein is not limited to the illustrated flowchart. Hereinafter, each step will be described in detail.

### <Preparation Step S10>

The preparation step S10 includes preparing a mixed liquid containing Ni, trivalent Co, and ammonia. In the mixed liquid, Ni, Co, and ammonia are dissolved in a solvent. Ni and Co can each form an ammine complex and exist stably in the mixed liquid.

The Ni concentration contained in the mixed liquid is not particularly limited, but is, for example, 0.1 mol/L or more, or 0.5 mol/L or more. Further, the Ni concentration contained in the mixed liquid is, for example, 2.5 mol/L or less, or 2.0 mol/L or less.

The Co concentration contained in the mixed liquid is not particularly limited, but is, for example, 0.1 mol/L or more, or 0.5 mol/L or more. Further, the Co concentration contained in the mixed liquid is, for example, 2.5 mol/L or less, or 2.0 mol/L or less.

At least a part of Co contained in the mixed liquid exists as trivalent Co. Co contained in the mixed liquid may exist as divalent Co, for example, in addition to trivalent Co. The amount of trivalent Co contained in the mixed liquid is not particularly limited, but for example, 5% or more, or 10% or more of the total amount of Co contained in the mixed liquid may be trivalent Co. Further, the entirety of the Co contained in the mixed liquid may be trivalent Co.

The mixed liquid may further contain Mn. Mn is precipitated as a part of the precursor of the positive electrode active material, similarly to Ni and Co. When the mixed liquid contains Mn, the Mn concentration is not particularly limited, but is, for example, 0.1 mol/L or more, or 0.5 mol/L or more. Further, the Mn concentration contained in the mixed liquid is, for example, 2.5 mol/L or less, or 2.0 mol/L or less.

The Ni concentration and Co concentration of the mixed liquid can be measured, for example, by inductively coupled plasma (ICP) emission spectroscopic analysis. The presence of trivalent Co contained in the mixed liquid can be confirmed by ultraviolet-visible spectroscopy. The amount of trivalent Co can be estimated by, after quantifying the amount of divalent Co using an extractant that extracts only divalent Co (for example, a LIX series extractant), subtracting the amount of divalent Co from the total amount of Co obtained from ICP.

The ammonia concentration contained in the mixed liquid is not particularly limited, but is, for example, 1% by mass or more, preferably 5% by mass or more, more preferably 10% by mass or more, and still more preferably 15% by mass or more. Further, the upper limit of the concentration of ammonia is the saturated concentration in a solvent (for example, water) of ammonia, and is thus about 35% by mass. From the viewpoint of leaching ability for leaching Ni and Co from the NiCo-containing raw material described later and ease of handling, the concentration of ammonia is particularly preferably 15% by mass to 25% by mass.

The solvent of the mixed liquid is not particularly limited as long as it can dissolve Ni, Co, and ammonia, but water is preferably used. Water has high solubility for ammonia, and water in which ammonia is dissolved (ammonia water) is preferable because it has high leaching ability for Ni and Co.

The mixed liquid preferably contains carbonate ions. The amount of carbonate ions contained in the mixed liquid is, for example, preferably equal to or more than the total amount (in terms of mol) of Ni and Co dissolved in the mixed liquid, more preferably 1.2 times or more the total amount, and still more preferably 1.5 times or more the total amount. The greater the amount of carbonate ions, the more the crystallization rate of Co can be improved. The upper limit of the amount of carbonate ions is not particularly limited, but is, for example, 100 times or less the total amount (in terms of mol) of Ni and Co dissolved in the mixed liquid. Note that carbonate ions can be added to the mixed liquid by dissolving a carbonate in a solvent, for example. Examples of the carbonate include ammonium carbonate, ammonium hydrogen carbonate, and the like. In the example shown in FIG. 2, ammonium carbonate is dissolved in the mixed liquid. In this example, ammonium carbonate also functions as a pH adjuster.

The pH of the mixed liquid at 20°C is, for example, 9 to 12, preferably 10 to 11. A pH adjuster may be used to adjust the pH of the mixed liquid. Examples of the pH adjuster include ammonium sulfate, ammonium carbonate, and the like.

The method for preparing the mixed liquid is not particularly limited, but in the example shown in FIG. 2, the mixed liquid (leachate) is prepared by ammonia leaching of a NiCo-containing raw material containing Ni and Co. Hereinafter, the method for preparing the mixed liquid in the example shown in FIG. 2 will be described in detail.

The type of the NiCo-containing raw material is not particularly limited as long as it contains Ni and Co. The NiCo-containing raw material may be one type of compound containing Ni and Co, or may be a mixture of two or more types of compounds.

When the raw material is a mixture, for example, the mixture includes at least a compound containing Ni and a compound containing Co. For example, the mixture includes at least a compound containing Ni and Co and a compound containing one of Ni and Co. Further, the mixture may further include a compound that does not contain Ni and Co.

Examples of the raw material containing Ni and Co include ores containing Ni and Co (particularly oxide ores), inorganic compounds containing Ni and Co (particularly inorganic oxides), battery waste containing Ni and Co, and the like. From the viewpoint of material recycling, it is advantageous to use battery waste containing Ni and Co as a raw material.

Specific examples of battery waste include black mass of used lithium-ion secondary batteries (particularly, black mass obtained by crushing and roasting used lithium-ion secondary batteries), positive electrode waste taken out from used lithium-ion secondary batteries, electrode body waste taken out from used lithium-ion secondary batteries, waste of positive electrodes judged to be defective in production, waste of electrode bodies judged to be defective in production, positive electrode active materials judged to be defective in production, and the like. Note that in these battery wastes, when lithium nickel cobalt manganese-based composite oxides, lithium nickel cobalt aluminum-based composite oxides, or the like are used as the positive electrode active material, the battery waste contains Ni and Co.

It is more preferable that the raw material contains Ni and Co as metals. From this viewpoint, when the raw material is waste, it is preferably subjected to reduction roasting. The waste is preferably black mass obtained by crushing and roasting used lithium-ion secondary batteries.

The black mass can be obtained, for example, specifically by crushing lithium-ion secondary batteries according to a known method, performing sieving if necessary, and roasting at 400°C to 1500°C (preferably 700°C to 1000°C) in an atmosphere with an oxygen concentration of 5 vol% or less (preferably 1 vol% or less) (particularly, under an inert gas atmosphere such as argon gas or nitrogen gas) for 1 hour to 24 hours (preferably 4 hours to 12 hours).

The raw material may further contain elements other than Ni and Co. For example, the raw material may further contain Mn. When the raw material is battery waste, Mn may be derived from lithium nickel cobalt manganese-based composite oxide, which is a positive electrode active material. For example, the raw material may further contain Li. When the raw material is battery waste, Li may be derived from the positive electrode active material, supporting salt, and the like. The raw material may further contain Al. When the raw material is battery waste, Al may be derived from lithium nickel cobalt aluminum-based composite oxide, which is a positive electrode active material, the positive electrode current collector, electrode terminal, battery case, and the like. The raw material may further contain Cu. When the raw material is battery waste, Cu may be derived from the negative electrode current collector, electrode terminal, and the like. When the raw material is battery waste, it preferably does not contain at least one of Cu and Li, and more preferably does not contain both Cu and Li. Therefore, the battery waste may be one that has been subjected to some treatment, and for example, may be one that has been subjected to treatment for removing at least one of Cu and Li.

For ammonia leaching, ammonia water is used as a leaching agent. By mixing ammonia water and the NiCo-containing raw material, Ni and Co can be leached from the NiCo-containing raw material into the liquid phase.

The ammonia concentration of the ammonia water is not particularly limited, but the higher the concentration, the higher the leaching ability. Therefore, the concentration of ammonia in the ammonia water is, for example, 1% by mass or more, preferably 5% by mass or more, more preferably 10% by mass or more, and still more preferably 15% by mass or more. Further, the upper limit of the concentration of ammonia is the saturated concentration in ammonia water, and is thus about 35% by mass. From the viewpoint of leaching ability and ease of handling, the concentration of ammonia is particularly preferably 15% by mass to 25% by mass.

For ammonia leaching, a compound that can function as a pH adjuster, such as ammonium carbonate or ammonium sulfate, may be used. The pH of the mixed liquid in which the NiCo-containing raw material and ammonia water are mixed is adjusted to be, for example, 9 to 12, preferably 10 to 11 at 20°C. In the example shown in FIG. 2, ammonium carbonate is used. Ammonium carbonate may be mixed with ammonia water in advance, or may be mixed after mixing ammonia water and the NiCo-containing raw material.

The amount of ammonium carbonate is, for example, preferably equal to or more than the total amount (in terms of mol) of Ni and Co contained in the NiCo-containing raw material, and more preferably 1.5 times or more the total amount. Thereby, in the crystallization step S30 described later, the NiCo-containing carbonate is easily precipitated.

The ammonia water may contain only water, ammonia, and a pH adjuster (for example, ammonium carbonate). The ammonia water may further contain components other than water, ammonia, and a pH adjuster within a range (for example, at a concentration of less than 10% by mass, 5% by mass or less, or 1% by mass or less) that does not impair the effects of the present disclosure.

The amount of ammonia water used is not particularly limited, and may be about the same as the amount of ammonia water used in known ammonia leaching methods. For example, the amount of ammonia water used is an amount that completely immerses the NiCo-containing raw material.

In the example shown in FIG. 2, during ammonia leaching, oxygen is supplied to the mixed liquid in which the black mass as the NiCo-containing raw material, ammonia water, and ammonium carbonate are mixed. The supply of oxygen can be performed, for example, by introducing a gas containing oxygen (for example, oxygen gas, air, etc.) into the mixed liquid by bubbling or the like. At this time, the smaller the bubbles, the more efficiently the amount of dissolved oxygen can be increased. Alternatively, for example, the supply of oxygen can be performed by sealing a container and introducing oxygen therein while pressurizing.

Ammonia leaching can be performed, for example, as follows. First, a container is prepared. The container may be a known container used for ammonia leaching. If necessary, heating means such as a heater, temperature measuring means such as a thermometer or a temperature sensor, stirring means such as a stirring blade or a magnetic stirrer, and the like are attached to the container. Further, a bubbling device is prepared. The bubbling device may be a known one used in leaching. The bubbling device may be attached to the container before charging the NiCo-containing raw material and ammonia water, or may be attached to the container after charging the NiCo-containing raw material and ammonia water.

The NiCo-containing raw material, ammonia water, and ammonium carbonate are charged into the container. The order in which these are charged is not particularly limited, and they may be charged in order or simultaneously. On the other hand, a gas containing oxygen is supplied to the mixed liquid by the bubbling device. Here, it is preferable to supply oxygen gas to the mixed liquid by bubbling. Thereby, the NiCo-containing raw material and ammonia can sufficiently contact in the mixed liquid, and ammonia leaching can be performed efficiently.

The amount of oxygen supplied is preferably equimolar or more with respect to the elements that may be oxidized contained in the NiCo-containing raw material (particularly, Ni and Co), more preferably 2 molar times or more, and still more preferably 3 molar times or more. The amount of oxygen supplied may be 100 molar times or less than the elements that may be oxidized contained in the NiCo-containing raw material.

The leaching temperature in ammonia leaching is not particularly limited, and is preferably more than 0°C and 80°C or less, more preferably 10°C or more and 50°C or less, and still more preferably 15°C or more and 35°C or less (referred to as "room temperature" in the present specification).

It is preferable to perform stirring during leaching. The stirring speed is not particularly limited, but is preferably 200 rpm or more, more preferably 300 rpm or more, and still more preferably 400 rpm or more. The stirring speed may be 2000 rpm or less, 1000 rpm or less, or 800 rpm or less.

The leaching time can be appropriately determined according to the leaching temperature. The higher the leaching temperature, the shorter the time required to complete leaching. Note that by dissolving oxygen in the ammonia aqueous solution, the leaching rate of Ni and Co is increased. The increase in the leaching rate is considered to result from the oxidation of Ni and Co to species that are more readily solubilized under ammonia-containing conditions. The leaching time is, for example, 1 hour or more, preferably 2 hours or more, and more preferably 4 hours or more. On the other hand, from the viewpoint of operational efficiency, the leaching time is, for example, 48 hours or less, preferably 24 hours or less, and more preferably 10 hours or less.

Leaching can be terminated by performing solid-liquid separation such as filtration. As described above, Ni and Co can be leached into the liquid phase. Note that by ammonia leaching, at least a part of Co is oxidized and leached as trivalent Co. Therefore, the mixed liquid prepared in the preparation step S10 can be obtained. That is, this mixed liquid contains Ni, trivalent Co, and ammonia. On the other hand, a solid residue can be obtained. Note that when the raw material contains metal elements other than Ni and Co, the solid residue may contain metal elements other than Ni and Co.

Note that the ammonia leaching operation of Ni and Co may be performed only once or may be performed multiple times. By performing the leaching operation multiple times, more Ni and Co can be recovered. When performing the leaching operation multiple times, for example, leaching may be performed by mixing ammonia water and ammonium carbonate with the solid residue obtained by solid-liquid separation after leaching. The ammonia water used for the second and subsequent times or the ammonia water in which ammonium carbonate is dissolved may be new or may be one used once for leaching.

### [Reduction Step S20]

The reduction step S20 is a step of mixing the mixed liquid prepared in the preparation step S10 with a reducing agent to reduce the trivalent Co contained in the mixed liquid to divalent Co. Since trivalent Co is more stable under a liquid phase containing ammonia than divalent Co, by reducing trivalent Co to divalent Co, Co can be easily precipitated.

Note that in some examples, Cu is dissolved in the mixed liquid prepared in the preparation step S10. In the mixed liquid, at least a part of the dissolved Cu exists as monovalent or divalent Cu. In the reduction step S20, monovalent or divalent Cu can be reduced to metal by the reducing agent and precipitated as a solid. Therefore, after precipitation of Cu, Cu can be removed from the mixed liquid by performing solid-liquid separation, for example.

The reducing agent is not particularly limited as long as it can reduce trivalent Co to divalent Co, and examples thereof include hydrazine, sulfites, and metals. Such a metal is preferably at least one metal selected from the group consisting of Ni, Co, and Mn. Ni, Co, and Mn are all metals widely used in positive electrode active materials of lithium-ion secondary batteries. By using at least one metal selected from the group consisting of Ni, Co, and Mn as a reducing agent, the mixed metal is precipitated as a part of the precursor of the positive electrode active material to be produced, and therefore the composition of the precursor can be adjusted. For example, by using Ni metal as a reducing agent, the proportion of Ni in the precursor of the positive electrode active material can be increased. Note that one type of metal may be used as the reducing agent, or two or more types may be used. When using two or more types of metals, they may be mixed with the mixed liquid at the same time, or each of them may be mixed with the mixed liquid at different timings. The metal is preferably a simple substance.

The shape of the metal used as the reducing agent is not particularly limited, and may be powdery, granular, massive, or the like, but is preferably powdery. When the metal is powdery, the specific surface area becomes relatively large, and therefore the reduction reaction can be performed in a short time.

The amount (mol) of the reducing agent mixed with the mixed liquid is not particularly limited, but for example, the amount of electrons (mol) released by the reducing agent during the reaction is equal to or more than the amount (mol) of trivalent Co contained in the mixed liquid, more preferably an amount exceeding the equal amount. Theoretically, by mixing a reducing agent that releases an amount of electrons equal to or more than the trivalent Co, all of the trivalent Co contained in the mixed liquid can be reduced to divalent Co, and therefore the crystallization rate of Co can be improved in the crystallization step S30 described later. Further, by mixing more reducing agent than the trivalent Co, unreacted trivalent Co can be reduced or eliminated.

From the viewpoint of shortening the time required for production, the amount of electrons (mol) released by the reducing agent during the reaction may be, for example, half or more of the amount (mol) of Co contained in the mixed liquid, preferably equal to or more than the equal amount, and further may exceed the equal amount. Thereby, the reducing agent can be mixed with the mixed liquid without measuring the amount of trivalent Co contained in the mixed liquid.

Note that when the mixed liquid contains Cu, it is preferable to set the amount of reducing agent in consideration of the amount of Cu as well. For example, when the amount of Cu dissolved in the mixed liquid exceeds 1% of the amount of trivalent Co dissolved in the mixed liquid, it is particularly preferable to take the amount of Cu into consideration. Since Cu dissolved in the mixed liquid is reduced by the reducing agent, by setting the amount of reducing agent in consideration of the amount of Cu, the amount of unreacted trivalent Co can be reduced. For example, it is preferable to mix an amount of electrons (mol) released by the reducing agent that is equal to or more than, preferably an amount exceeding, "the total amount of the amount of trivalent Co contained in the mixed liquid (mol) and the amount of Cu dissolved in the mixed liquid (mol)" with the mixed liquid. Note that the amount of Cu dissolved in the mixed liquid can be measured, for example, by ICP emission spectroscopic analysis.

In the case where metal is used as the reducing agent, when an excess amount of metal (i.e., more than the trivalent Co) is mixed, the metal may remain in the mixed liquid as a solid without dissolving. This is presumed to be due to the fact that all of the trivalent Co in the mixed liquid has been reduced. Further, the metal remaining as a solid can be removed by solid-liquid separation and can also be reused. Therefore, when using metal as the reducing agent, the amount of metal may be determined based on whether a portion of the metal remains undissolved e after the reduction reaction. Thereby, the reaction of reducing trivalent Co to divalent Co can be performed without shortage without accurately measuring the amount of trivalent Co contained in the mixed liquid.

The reduction reaction is started by mixing the mixed liquid and the reducing agent. During the reduction reaction, it is preferable to stir the mixed liquid to which the reducing agent has been mixed in order to increase the rate of the reduction reaction. The stirring speed is not particularly limited, but is preferably 200 rpm or more, more preferably 300 rpm or more, and still more preferably 400 rpm or more. The stirring speed may be 2000 rpm or less, 1000 rpm or less, or 800 rpm or less.

The time for the reduction reaction is not particularly limited, but is, for example, 1 hour or more, preferably 2 hours or more, and more preferably 4 hours or more. On the other hand, from the viewpoint of operational efficiency, the time for the reduction reaction is, for example, 48 hours or less, preferably 24 hours or less, and more preferably 10 hours or less. Note that when metal is used as the reducing agent, the reduction reaction can be terminated when the metal ceases to dissolve. Note that if all of the metal has dissolved after a predetermined time, metal may be added and the reduction reaction may be continued further.

The temperature of the mixed liquid during the reduction reaction is not particularly limited, and is preferably more than 0°C and 80°C or less, more preferably 10°C or more and 50°C or less, and still more preferably 15°C or more and 35°C or less (room temperature).

When reacting the mixed liquid with the reducing agent (during the reduction reaction), it is preferable to be under an inert atmosphere. Divalent Co contained in the mixed liquid reacts with oxygen and is oxidized to trivalent Co. Therefore, by performing the reduction reaction under an inert atmosphere, the crystallization rate of Co can be improved. Note that the "inert atmosphere" in the present specification is not limited to a complete inert atmosphere in which the content of inert gas is 100% (oxygen element is not contained), and may contain a trace amount of oxygen. Specifically, the oxygen content may be 10 vol% or less, preferably 5 vol% or less, more preferably 2 vol% or less, and still more preferably 0 vol% (that is, oxygen is not contained). As the inert gas, for example, nitrogen, argon, and the like are preferably used. The "inert atmosphere" in the present specification also includes an embodiment in which a gas containing an inert gas as a main component is bubbled into the mixed liquid. The gas containing an inert gas as a main component contains, for example, an inert gas content of 90 vol% or more, preferably 95 vol% or more, more preferably 98 vol% or more, and still more preferably 100 vol%. By bubbling a gas containing an inert gas as a main component into the mixed liquid, re-oxidation of Co reduced to divalent to trivalent is suppressed. In the example shown in FIG. 2, the reduction reaction is performed in an oxygen-free (i.e., 100 vol% inert gas) atmosphere while bubbling with inert gas.

The mixed liquid after the reduction reaction (also referred to as the mixed liquid before the crystallization step S30) contains Ni, divalent Co, and ammonia. In the mixed liquid after the reduction reaction, most of Co (for example, 95% or more, preferably 98% or more, more preferably 100%) may exist as divalent Co. The mixed liquid before the crystallization step S30 further contains an anion that forms a salt with Ni and divalent Co. The salt of such an anion with Ni and/or divalent Co precipitates as a solid in the crystallization step S30. Examples of such anions include carbonate ions, sulfate ions, and the like. Among these, it is preferable to contain carbonate ions. In the example shown in FIG. 2, the mixed liquid contains carbonate ions from the ammonium carbonate used during ammonia leaching. Note that in order to supply carbonate ions to the mixed liquid, a carbonate (for example, ammonium carbonate, ammonium hydrogen carbonate, etc.) may be added to the mixed liquid before or after the reduction reaction. The amount (mol) of carbonate ions contained in the mixed liquid after the reduction reaction is, for example, preferably equal to or more than the total amount (mol) of Ni and Co dissolved in the mixed liquid, more preferably 1.2 times or more the total amount (mol) of Ni and Co dissolved in the mixed liquid, and still more preferably 1.5 times or more the total amount (mol) of Ni and Co dissolved in the mixed liquid. Note that when sulfate ions are included as the above-mentioned anion, for example, ammonium sulfate can be used as a supply source of sulfate ions.

Note that in some examples, solid-liquid separation such as filtration may be performed on the mixed liquid after the reduction reaction before the crystallization step S30. Thereby, solids such as undissolved reducing agent (also referred to as reducing agent residue) and metal precipitated by the reduction reaction (for example, Cu) can be removed from the mixed liquid. As a result, these solids are less likely to be mixed into the solid NiCo-containing compound obtained in the crystallization step S30 as impurities.

### [Crystallization Step S30]

The crystallization step S30 is a step of precipitating a NiCo-containing compound that becomes a precursor of a positive electrode active material from the mixed liquid after the reduction step S20. In the crystallization step S30, for example, the NiCo-containing compound is precipitated by lowering the ammonia concentration of the mixed liquid. As the ammonia concentration of the mixed liquid decreases, Ni and Co cannot exist stably in the mixed liquid, and therefore precipitate as solids. When Mn is present in the mixed liquid (for example, when Mn metal is used as a reducing agent), Mn also precipitates as a solid together with Ni and Co.

The method for lowering the ammonia concentration of the mixed liquid includes, for example, a method of evaporating ammonia, a method of mixing with a liquid (for example, water) having a lower ammonia concentration than the mixed liquid, and the like. Among these, a method of evaporating ammonia from the mixed liquid is preferable. By evaporating ammonia, the ammonia concentration in the mixed liquid can be significantly lowered, and therefore Co cannot exist stably in the mixed liquid, and the crystallization rate of Co is improved. The crystallization rate of Ni in the mixed liquid can also be improved for the same reason as Co. In the example shown in FIG. 2, the ammonia concentration of the mixed liquid is lowered by ammonia evaporation. Hereinafter, this step will be described using ammonia evaporation as an example.

The temperature in ammonia evaporation may be, for example, 15°C to 35°C (room temperature), but is preferably 60°C or more, and more preferably 80°C or more. The higher the temperature, the more ammonia evaporation is promoted, and the time for the crystallization step S30 can be shortened. The temperature in ammonia evaporation may be, for example, below the boiling point of the solvent, and when the solvent is water, it may be below 100°C. If too much solvent of the mixed liquid evaporates, many dissolved substances will precipitate as solids. As a result, impurities may be mixed into the precipitating NiCo-containing compound, so it is preferable to adjust the temperature so that the liquid phase remains after ammonia evaporation. Note that carbonates such as ammonium carbonate and ammonium hydrogen carbonate also precipitate as solids and may become impurities, but since these are water-soluble, they can be easily removed by water washing.

Ammonia evaporation is preferably performed while stirring the mixed liquid. Thereby, spheroidization of the crystallized substance can occur due to repeated collisions between crystallized substance particles. When used as a battery material, spherical particles are preferable from the viewpoint of filling properties. The stirring speed is not particularly limited, but is preferably 200 rpm or more, more preferably 300 rpm or more, and still more preferably 400 rpm or more. The stirring speed may be 2000 rpm or less, 1000 rpm or less, or 800 rpm or less.

The time for ammonia evaporation can be appropriately determined according to the temperature. The higher the temperature, the shorter the time required to complete ammonia evaporation. The evaporation time of ammonia is, for example, 1 hour or more, preferably 2 hours or more, and more preferably 4 hours or more. On the other hand, from the viewpoint of operational efficiency, the time for ammonia evaporation is, for example, 48 hours or less, preferably 24 hours or less, and more preferably 10 hours or less. Ammonia evaporation may be completed when the ammonia concentration in the mixed liquid becomes a predetermined value or less (preferably 0%), or may be completed based on the state (for example, amount, shape, composition, etc.) of the precipitated NiCo-containing compound.

By ammonia evaporation, a NiCo-containing compound is obtained as a solid. The NiCo-containing compound can be recovered, for example, by performing solid-liquid separation such as filtration of the mixed liquid. After solid-liquid separation, if necessary, the NiCo-containing compound may be washed with water and then dried. The NiCo-containing compound may further contain Mn when Mn is contained in the mixed liquid. In the example shown in FIG. 2, since the mixed liquid contains carbonate ions, the NiCo-containing compound precipitates as a NiCo-containing carbonate.

In the present technology, since the trivalent Co in the mixed liquid is reduced to divalent Co before the crystallization step S30, the crystallization rate of Co in the mixed liquid can be improved in the crystallization step S30. Therefore, almost no Co remains in the liquid phase from which the NiCo-containing compound precipitated as a solid has been removed by solid-liquid separation. When the Co content in the mixed liquid before the crystallization step S30 is taken as 100%, the Co content of the liquid phase is, for example, 15% or less, preferably 10% or less, more preferably 5% or less, still more preferably 2% or less, or 0%. The liquid phase may be reused, and may be added to the mixed liquid, for example, before or after ammonia leaching or reduction reaction.

The NiCo-containing compound can be used as a precursor of a positive electrode active material for lithium-ion secondary batteries. For example, when a NiCo-containing compound is obtained as a carbonate, the carbonate can be converted to an oxide (here, a NiCo-containing composite oxide) by heat treatment. From such an oxide, a positive electrode active material can be obtained, for example, by mixing the oxide with a Li compound and firing. Examples of the Li compound include lithium carbonate, lithium nitrate, lithium hydroxide, and the like. Since the heat treatment method, mixing method of Li compound, and firing method may be carried out according to known methods, details are omitted.

Hereinafter, Examples relating to the present disclosure will be described in detail, but it is not intended to limit the present disclosure to those shown in such Examples.

### [Test Example 1]

First, roasted black mass of a leaching sample was prepared by the following procedure. A positive electrode having a positive electrode active material layer containing a lithium nickel cobalt manganese composite oxide (LiNi_{0.6}Co_{0.2}Mn_{0.2}O₂) on aluminum (Al) foil was crushed. The crushed product of the positive electrode was passed through a sieve with an opening of 500 µm to produce a positive electrode powder. Further, a negative electrode having a negative electrode active material layer containing graphite on copper foil was crushed. The crushed product of the negative electrode was passed through a sieve with an opening of 500 µm to produce a negative electrode powder. The obtained positive electrode powder and negative electrode powder were mixed to obtain black mass. The black mass was roasted at 750°C for 6 hours under a low oxygen atmosphere to obtain roasted black mass in which most of the metals were reduced.

Next, the roasted black mass obtained above and ammonium carbonate in an amount 1.5 times (in terms of mol) the total amount (in terms of mol) of Ni and Co contained in the roasted black mass were charged into ammonia water of 13 mol/L (24.3% by mass). Thereafter, at room temperature, the ammonia water was stirred for 6 hours at a stirring speed of 500 rpm. During stirring, oxygen gas was bubbled into the ammonia water. Thereafter, solid-liquid separation was performed by filtration to obtain a leachate and a solid residue.

Note that as a result of ICP emission spectroscopic analysis, the amount of Cu contained in the leachate was 1% or less of the amount of Co.

The obtained leachate was stirred at 80°C for 6 hours to evaporate ammonia. Thereby, a crystallized substance was generated. Thereafter, solid-liquid separation was performed by filtration to separate the crystallized substance and the liquid phase.

The obtained crystallized substance was analyzed by scanning electron microscope energy dispersive X-ray spectroscopy (SEM-EDS). As a result, Ni, Co, O, and C were detected from the crystallized substance. Therefore, it was judged that a carbonate containing Ni and Co was obtained.

### [Test Example 2]

The amount of Co (in terms of mol) contained in the leachate obtained by solid-liquid separation in Test Example 1 was measured by inductively coupled plasma (ICP) emission spectroscopic analysis. Thereafter, Co metal powder in an amount of half (in terms of mol) of the amount of Co contained in the leachate was added to the leachate. The leachate was stirred at room temperature for 6 hours while bubbling nitrogen gas into the leachate. Thereafter, solid-liquid separation was performed by filtration to confirm the presence or absence of undissolved Co metal powder, and in this test example, it was confirmed that there was no undissolved residue. Thereafter, as in Test Example 1, the mixture was stirred at 80°C for 6 hours to evaporate ammonia. Solid-liquid separation was performed by filtration to separate the crystallized substance and the liquid phase.

### [Test Example 3]

In Test Example 2, the crystallized substance and the liquid phase were obtained in the same manner except that the amount of Co metal powder added was changed to be equal (in terms of mol) to the amount of Co contained in the leachate. Note that in Test Example 3, it was confirmed that there was undissolved Co metal powder by solid-liquid separation.

### [Test Example 4]

The crystallized substance and the liquid phase were obtained in the same manner as in Test Example 3 except that oxygen gas bubbling was performed instead of nitrogen gas bubbling in the stirring after adding the Co metal powder.

### [Test Example 5]

The crystallized substance and the liquid phase were obtained in the same manner as in Test Example 3 except that gas bubbling was not performed in the stirring after adding the Co metal powder.

### [Test Example 6]

The crystallized substance and the liquid phase were obtained in the same manner as in Test Example 3 except that Ni metal powder was used instead of Co metal powder.

### [Evaluation of Co Crystallization Rate]

In each test example, the amount of Co contained in the leachate before crystallization (in Examples 2 to 6, the leachate after separating the residue of the reducing agent) was measured by ICP emission spectroscopic analysis. Further, in each example, after dissolving the obtained crystallized substance in acid, the amount of Co contained in the crystallized substance was measured by ICP emission spectroscopic analysis. Thereby, the ratio of the amount of Co contained in the crystallized substance to the amount of Co contained in the leachate before crystallization was determined as a percentage, and this value was defined as the Co crystallization rate (%). The results are shown in Table 1.

### [Evaluation of Cu Removal Rate]

Further, in Test Examples 3, 5, and 6, for the reducing agent residue (solid obtained by solid-liquid separation after the reduction reaction and before ammonia evaporation) and the obtained crystallized substance, the amount of Cu contained in each was measured by ICP emission spectroscopic analysis. The obtained crystallized substance was subjected to ICP emission spectroscopic analysis after being dissolved in acid. The ratio of the amount of Cu contained in the reducing agent residue to the total amount of Cu contained in the reducing agent residue and the crystallized substance was determined as a percentage, and this value was taken as the Cu removal rate (%). The results are shown in Table 1.

### [Table 1]

**Table 1**

| Test Example | Gas Bubbling During Reduction Reaction | Reducing Agent | Amount of Reducing Agent Relative to Co in Mixed Liquid | Reducing Agent Residue | Co Crystallization Rate (%) | Cu Removal Rate (%) |
|---|---|---|---|---|---|---|
| 1 | - | - | - | - | 80 | - |
| 2 | Nitrogen | Co metal | Half amount | None | 92 | - |
| 3 | Nitrogen | Co metal | Equal amount | Present | 100 | 100 |
| 4 | Oxygen | Co metal | Equal amount | None | 85 | - |
| 5 | - | Co metal | Equal amount | Present | 100 | 100 |
| 6 | Nitrogen | Ni metal | Equal amount | Present | 100 | 100 |

From the above results, it can be seen that by performing crystallization after performing the reduction reaction, the Co crystallization rate can be improved.

Although specific examples of the present disclosure have been described in detail above, these are merely examples and do not limit the scope of claims. The technology described in the scope of claims includes various modifications and changes of the specific examples illustrated above.

As described above, specific embodiments of the technology disclosed herein include those described in the following items.

### Item 1:

A method for producing a precursor of a positive electrode active material, comprising:
a preparation step of preparing a mixed liquid containing Ni, trivalent Co, and ammonia;
a reduction step of mixing the mixed liquid with a reducing agent to reduce the trivalent Co in the mixed liquid to divalent Co; and
a crystallization step of lowering the ammonia concentration of the mixed liquid after the reduction step to precipitate a NiCo-containing compound,
wherein the mixed liquid before the crystallization step contains an anion that forms a salt with Ni and divalent Co.

### Item 2:

The production method according to Item 1, wherein the reducing agent is at least one metal selected from the group consisting of Ni, Co, and Mn.

### Item 3:

The production method according to Item 1 or 2, wherein the mixed liquid and the reducing agent are reacted under an inert atmosphere.

### Item 4:

The production method according to any one of Items 1 to 3, wherein in the crystallization step, the NiCo-containing compound is precipitated by evaporating ammonia from the mixed liquid.

### Item 5:

The production method according to any one of Items 1 to 4, wherein the mixed liquid before the crystallization step contains carbonate ions as the anion.

### Item 6:

The production method according to Item 5, wherein the mixed liquid before the crystallization step contains carbonate ions in an amount equal to or more than the total amount (mol) of Ni and Co.

### Item 7:

The production method according to any one of Items 1 to 6, wherein the mixed liquid prepared in the preparation step is prepared by leaching black mass obtained by crushing and roasting used lithium-ion secondary batteries in ammonia water.

### Item 8:

The production method according to Item 7, wherein the black mass, the ammonia water, and ammonium carbonate are mixed to obtain the mixed liquid.

## Claims

1. A method for producing a precursor of a positive electrode active material, comprising:
a preparation step (S10) of preparing a mixed liquid containing Ni, trivalent Co, and ammonia;
a reduction step (S20) of mixing the mixed liquid with a reducing agent to reduce the trivalent Co in the mixed liquid to divalent Co; and
a crystallization step (S30) of lowering the ammonia concentration of the mixed liquid after the reduction step (S20) to precipitate a NiCo-containing compound,
wherein the mixed liquid before the crystallization step (S30) contains an anion that forms a salt with Ni and divalent Co.

2. The production method according to claim 1, wherein the reducing agent is at least one metal selected from the group consisting of Ni, Co, and Mn.

3. The production method according to claim 1 or 2, wherein the mixed liquid and the reducing agent are reacted under an inert atmosphere.

4. The production method according to any one of claims 1 to 3, wherein in the crystallization step (S30), the NiCo-containing compound is precipitated by evaporating ammonia from the mixed liquid.

5. The production method according to any one of claims 1 to 4, wherein the mixed liquid before the crystallization step (S30) contains carbonate ions as the anion.

6. The production method according to claim 5, wherein the mixed liquid before the crystallization step (S30) contains carbonate ions in an amount equal to or more than the total amount (mol) of Ni and Co.

7. The production method according to any one of claims 1 to 6, wherein the mixed liquid prepared in the preparation step (S10) is prepared by leaching black mass obtained by crushing and roasting used lithium-ion secondary batteries in ammonia water.

8. The production method according to claim 7, wherein the black mass, the ammonia water, and ammonium carbonate are mixed to obtain the mixed liquid.
